# EUROPÄISCHE PATENTSCHRIFT

(11) **EP 4 382 010 B1**
(45) Veröffentlichungstag und Bekanntmachung des Hinweises auf die Patenterteilung: **07.05.2025**
(21) Anmeldenummer: 22401035.5
(22) Anmeldetag: 07.12.2022
(51) Int. Cl.: A47J 42/08

(54) **KAFFEEMÜHLE UND VERFAHREN ZUR BEDIENERFREUNDLICHEN FIXIERUNG EINES MAHLWERKES EINER SOLCHEN**
COFFEE MILL AND METHOD FOR THE OPERATOR-FRIENDLY FIXATION OF A GRINDER OF SUCH A TYPE
MOULIN À CAFÉ ET PROCÉDÉ DE FIXATION CONVIVIALE D'UN BROYEUR D'UN TEL MOULIN

(43) Veröffentlichungstag der Anmeldung: 12.06.2024
(73) Patentinhaber: Eckstein, Stefan, 80804 München (DE)
(72) Erfinder: ECKSTEIN, Stefan, 80804 München (DE); ECKSTEIN, Fynn Frederic, 80803 München (DE)
(74) Vertreter: Gulde & Partner

(56) Entgegenhaltungen:
- EP-B1- 1 723 882
- GB-A- 2 452 966
- US-A1- 2004 164 193
- US-B2- 7 694 906
- US-B2- 7 878 437

## Beschreibung

Die Erfindung betrifft eine Kaffeemühle mit einer Kaffeemühleneinheit, wobei die Kaffeemühleneinheit einen Kaffeebohnenbehälter, eine ein Kegelradgetriebe aufweisende Mahlwerkseinheit, eine die Mahlwerkseinheit antreibende Antriebseinheit und einen Kaffeemehlauswurf aufweist, wobei die Mahlwerkseinheit einen Stator-Außenring und einen an einem drehbaren Schaft gelagerten Rotor-Drehkegel aufweist.

Ferner betrifft die Erfindung ein Verfahren zur bedienerfreundlichen Fixierung einer, einen Stator-Außenring und einen an einem drehbaren Schaft gelagerten Rotor-Drehkegel aufweisenden, in z-Richtung schwimmend gelagerten Mahlwerkseinheit einer solchen Kaffeemühle.

Derartige Kaffeemühlen sind in der Regel dafür vorgesehen, Kaffeemehl aus Kaffeebohnen zu erzeugen, insbesondere um das Kaffeemehl anschließend in Kaffeemaschinen, zur Herstellung von Kaffee oder kaffeeähnlichen Getränken zu verwenden.

Ein erster Typus von Kaffeemühlen basiert auf rotierenden Flügelmessern, die Kaffeebohnen in einem Vorratsbehälter durch Zerschneiden beziehungsweise Zerschlagen zerkleinern. Bei derartigen Kaffeemühlen ist nicht nur das Mahlgeräusch besonders unangenehm, darüber hinaus lässt sich der Vorratsbehälter nicht einfach vollständig leeren. Daher bleibt regelmäßig ein Kaffeemehlrest im Vorratsbehälter zurück, der dem Alterungsprozess unterliegt. Darüber hinaus ist auch der Zerschlagungsprozess aromaschädlich, nicht zuletzt, aufgrund der hohen Abwärme die durch das Zerschlagen entsteht.

Ein zweiter Typus von Kaffeemühlen basiert nicht auf einem Zerschneiden beziehungsweise auf rotierenden Flügelmessern, sondern weist ein Kegelmahlwerk auf. Dieses umfasst einen Stator und einen Rotor, die eine Mahlwerkseinheit bilden. Bei diesem Typus von Kaffeemühlen wird der Mahlgrad, definiert als die Feinheit der gemahlenen Kaffeebohnen, dadurch eingestellt, dass der Abstand zwischen dem Stator und dem Rotor in der Mahlwerkseinheit variiert werden kann. Hierzu kann beispielsweise der Stator mittels eines Gewindes stufenlos auf den Rotor zu- beziehungsweise wegbewegt werden. Nachteilig bei derartigen, auf einem Kegelmahlwerk basierenden Kaffeemühlen ist jedoch, dass nach der Einstellung des Abstands zwischen Stator und Rotor zur Festlegung des Mahlgrades der Stator fixiert werden muss. Ansonsten käme es zu einem unerwünschten Mitdrehen des Stators, wenn sich der Rotor dreht, was einem gewünschten Mahlprozess- beziehungsweise Ergebnis zuwiderlaufen würde.

Eine derartige, vorbekannte Kaffeemühle ist in der Patentschrift DE 102015 003 806 B3 und in der Patentschrift GB 2 452 966 A offenbart. Nachdem der Stator mit Hilfe eines Außengewindes in die korrekte Position, das heißt auf den gewünschten Abstand, der dem einzustellenden Mahlgrad entspricht, relativ zum Rotor gebracht wurde, muss der Stator vor dem Mahlprozess mit Hilfe einer eigens vorzusehenden und zu betätigenden Fixiereinrichtung fixiert werden, damit sich diese beim Drehen des Rotors nicht mit dreht.

Ausgehend von diesem diskutierten Stand der Technik liegt der Erfindung die vorrichtungsbezogene Aufgabe zugrunde, eine Kaffeemühle zu schaffen, die es nach erfolgter Einstellung eines gewünschten Mahlgrades erlaubt, unmittelbar den Mahlprozess zu starten, ohne dass ein weiterer Fixierschritt zur Vermeidung des Verdrehens des Stator-Außenrings beim Mahlprozess erforderlich ist. Insofern wird eine Kaffeemühle angestrebt, bei der sowohl die Handhabung vereinfacht ist als auch die erforderliche Zeit bis zum Starten des Mahlprozesses signifikant verringert ist.

Ausgehend von diesem diskutierten Stand der Technik liegt der Erfindung die verfahrensbezogene Aufgabe zugrunde, ein Verfahren zur bedienerfreundlichen Fixierung einer, einen Stator-Außenring und einen an einem drehbaren Schaft gelagerten Rotor-Drehkegel aufweisenden, in z-Richtung schwimmend gelagerten Mahlwerkseinheit einer solchen Kaffeemühle vorzuschlagen.

Gelöst wird diese vorrichtungsbezogene Aufgabe durch eine Mahlwerkseinheit, die derart schwimmend in z-Richtung gelagert ist, dass zur Verstellung des axialen Abstandes zwischen dem Stator-Außenring und dem Rotor-Drehkegel zur Einstellung des Mahlgrades, der Stator-Außenring an ein in z-Richtung verschiebliches und in Rotationsrichtung des Rotor-Drehkegels festgelegtes Anschlussmittel, insbesondere ein Fixierstift, angeschlossen ist und dieses Anschlussmittel mit, in Folge der Einstellung des Mahlgrades, variierender Eindringtiefe in eine Führungsaufnahme eines Führungselementes der Mahlwerkseinheit eingreift, wobei der Stator-Außenring an eine Objektivverstelleinheit angeschlossen ist, wobei die Objektivverstelleinheit über ein Feingewinde in z-Richtung verschieblich an den Kaffeebohnenbehälter angeschlossen ist.

Gelöst wird diese verfahrensbezogene Aufgabe durch ein Verfahren zur bedienerfreundlichen Fixierung einer, einen Stator-Außenring und einen an einem drehbaren Schaft gelagerten Rotor-Drehkegel aufweisenden, in z-Richtung schwimmend gelagerten Mahlwerkseinheit einer solchen Kaffeemühle, wobei zur Verstellung des axialen Abstandes zwischen dem Stator-Außenring und dem Rotor-Drehkegel zur Einstellung des Mahlgrades, der Stator an ein in z-Richtung verschiebliches, und in Rotationsrichtung des Rotor-Drehkegels festgelegtes Anschlussmittel, insbesondere ein Fixierstift, angeschlossen wird und dieses Anschlussmittel mit, in Folge der Einstellung des Mahlgrades, variierender Eindringtiefe in eine Führungsaufnahme eines Führungselementes der Mahlwerkseinheit in Eingriff gebracht wird, wobei der Stator an eine Objektivverstelleinheit angeschlossen wird, wobei die Objektivverstelleinheit über ein Feingewinde in z-Richtung verschieblich an den Kaffeebohnenbehälter angeschlossen wird.

Eine erfindungsgemäße Kaffeemühle weist eine Kaffeemühleneinheit auf. Diese Kaffeemühleneinheit umfasst einen Kaffeebohnenbehälter zur Aufnahme von Kaffeebohnen, eine ein Kegelradgetriebe aufweisende Mahlwerkseinheit sowie eine die Mahlwerkseinheit antreibende Antriebseinheit. Dabei verfügt die Mahlwerkseinheit über einen Stator-Außenring und einen an einem drehbaren Schaft gelagerten Rotor-Drehkegel, die für den eigentlichen Kaffeemahlprozess zuständig sind. Ferner umfasst die Kaffeemühleneinheit einen Kaffeemehlauswurf durch den das durch den Mahlprozess erzeugte Kaffeemehl möglichst vollständig aus der Kaffeemühle herausgebracht wird. Es versteht sich, dass der Bediener der Kaffeemühle das erzeugte Kaffeemehl in einem entsprechenden Auffangbehälter auffängt, insbesondere zur Weiterverarbeitung in einer Kaffeemaschine oder auch zur vorübergehenden Aufbewahrung.

Vorteilhaft bei der erfindungsgemäßen Kaffeemühle ist, dass ein eigener Fixierschritt, zur Verhinderung der Verstellung des Abstandes zwischen Rotor und Stator beim Betätigen der Kaffeemühle, wobei sich der Rotor dreht, gerade vermieden wird.

Hierzu ist die Mahlwerkseinheit schwimmend in z-Richtung, also: in vertikale Richtung, gelagert. Dabei ist zur Verstellung des axialen Abstandes zwischen dem Stator-Außenring und dem Rotor-Drehkegel zur Einstellung des Mahlgrades, der Stator-Außenring an ein in z-Richtung verschiebliches, festgelegtes Anschlussmittel angeschlossen. Das Anschlussmittel ist in Rotationsrichtung des Rotor-Drehkegels festgelegt, wobei es auch in z-Richtung festgelegt sein kann. Aufgrund der Festlegung des Anschlussmittels in Rotationsrichtung des Rotor-Drehkegels ist ein Mitdrehen des Stator-Außenrings beim Betätigen der Kaffeemühle vermieden, indem das Anschlussmittel (und damit auch der an diesem angeschlossene Stator-Außenring) in eine Führungsaufnahme eines Führungselementes der Mahlwerkseinheit eingreift. Dabei ist der Stator an eine Objektivverstelleinheit angeschlossen, wobei die Objektivverstelleinheit über ein Feingewinde in z-Richtung verschieblich an den Kaffeebohnenbehälter angeschlossen ist. Hierdurch wird die Mahlwerkseinheit schwimmend in z-Richtung gelagert, wobei das Anschlussmittel mit, in Folge der Einstellung des Mahlgrades, variierender Eindringtiefe in die Führungsaufnahme eingreift. Hierdurch wird einerseits die genaue Verstellung des Mahlgrades anhand des Feingewindes der Objektivverstelleinheit ermöglicht, wobei ein Fixierschritt zur Festlegung des Abstandes zwischen Stator-Außenring und dem Rotor-Drehkegel erfindungsgemäß gerade vermieden wird. Dieses wird dadurch erreicht, dass das Anschlussmittel die Kräfte in Rotationsrichtung des Rotor-Drehkegels, die auf den Stator-Außenring einwirken, an das Führungselement durch den Eingriff des Anschlussmittels in die Führungsaufnahme weitergibt beziehungsweise sich dort abstützt. Durch die hierbei auf besonders intelligente Art und Weise erreichte schwimmende Lagerung in z-Richtung wird die zur Verstellung des Mahlgrades erforderliche Verschieblichkeit in z-Richtung erhalten, während gleichzeitig die Abstützung und damit die Festlegung des Stator-Außenrings zum Erhalt des eingestellten Mahlgrades sichergestellt ist, und zwar, ohne einen gesondert durch den Bediener der Kaffeemühle vorzusehenden Fixierschritt. Damit ist die Bedienerfreundlichkeit erheblich gegenüber vorbekannten Kaffeemühlen verbessert.

Ein weiterer Vorteil der sich, aufgrund der oben beschriebenen erfindungsgemäßen schwimmend gelagerten Mahlwerkseinheit einstellt, besteht darin, dass die über das Feingewinde der Objektivverstelleinheit realisierte Mahlgradeinstellung das Vorsehen einer im Stand der Technik verbreiteten Druckfeder gerade entbehrlich macht. Hierdurch wird die Feinheit und Haptik für den Bediener bei der Einstellung des Mahlgrades noch weiter verbessert, was ebenfalls auf den Aspekt der verbesserten Bedienerfreundlichkeit einzahlt.

Vorzugsweise ist ein solches erfindungsgemäßes Anschlussmittel als Fixierstift ausgebildet. Dieser weist eine im Wesentlichen zylindrische Form auf, wobei die beiden Enden auch abgeschrägt ausgebildet sein können, um ein Einführen in die Führungsaufnahme zu erleichtern. Es versteht sich, dass die Führungsaufnahme des Führungselementes komplementär zu dem Anschlussmittel ausgebildet ist, damit das Anschlussmittel in der Führungsaufnahme (und somit auch der Stator-Außenring) in Rotationsrichtung des Rotor-Drehkegels spielfrei festgelegt ist.

Gemäß einer besonders bevorzugten und kompakten Ausgestaltung der erfindungsgemäßen Kaffeemühle ist die Mahlwerkseinheit in den Kaffebohnenbehälter integriert. Hierdurch wird nicht nur eine effiziente Bauraumausnutzung erreicht, sondern sind die technischen Details der Mahlwerkseinheit von außen nicht sichtbar, da die erforderliche Mimik zur Realisierung der Mahlwerkseinheit von dem Kaffeebohnenbehälter vollständig oder jedenfalls größtenteils umgeben ist. Dabei wird nicht nur eine Verkleidung der Mahlwerkseinheit zur Abschottung von beweglichen Teilen vermieden, sondern auch das optische Erscheinungsbild der Kaffeemühle deutlich eleganter.

Gemäß einer Weiterbildung der vorstehend beschriebenen Ausgestaltung der erfindungsgemäßen Kaffeemühle ist der Rotor-Drehkegel über eine Achse angetrieben, wobei die Achse so angeordnet ist, dass sie zum Transport von Kaffeebohnen aus dem Kaffeebohnenbehälter zum Stator-Außenring und zum Rotor-Drehkegel dient. Hierdurch wird auf besonders vorteilhafte Weise die kontinuierliche Versorgung des Rotor-Drehkegels beziehungsweise des Stator-Außenrings mit Kaffeebohnen sichergestellt, so dass der Mahlprozess weiter homogenisiert werden kann. Dabei ist die Achse insbesondere konzentrisch bezüglich des Stator-Außenrings angeordnet, so dass die Kaffeebohnen optimal zur Durchführung eines homogen ablaufenden Mahlprozesses positioniert werden.

In einer weiteren Ausgestaltung der erfindungsgemäßen Kaffeemühle umfasst dieses ein Wiege- und Steuersystem zum Bereitstellen einer definierten Menge an Kaffeemehl. Dieses geht mit der nicht zu unterschätzenden weiteren Steigerung der Bedienerfreundlichkeit einher, da der ansonsten für den Bediener zu absolvierende Prozess des separaten Abwiegens von Kaffeebohnen entfällt.

Gemäß einer Ausgestaltung der erfindungsgemäßen Kaffeemühle umfasst die, die Mahlwerkseinheit antreibende, Antriebseinheit eine Handschwungscheibe mit einer Handhabe. Hierdurch kann der Mahlprozess besonders sanft und kontrolliert - ohne die Erzeugung signifikanter Abwärme - durchgeführt werden.

In einer bezüglich der vorstehenden Ausführungsform alternativen Ausgestaltung der erfindungsgemäßen Kaffeemühle umfasst die, die Mahlwerkseinheit antreibende, Antriebseinheit einen Elektromotor.

Gemäß einer aufgrund ihrer feinen und leichtgängigen Einstellbarkeit des Mahlgrades besonders bevorzugten Ausgestaltung der erfindungsgemäßen Kaffeemühle weist die Objektivverstelleinheit ein Zylinderrad auf. Dieses erlaubt eine quasikontinuierliche Feinjustierung des Mahlgrades mit einer Genauigkeit von 1:1000. Bevorzugt dabei ist, wenn die Mahlgradjustage rastfrei vorgenommen wird, so dass die Bedienhaptik besonders sanft und fein, ähnlich wie bei einem Kameraobjektiv, ist.

In einer weiteren Ausgestaltung der erfindungsgemäßen Kaffeemühle ist die Kaffeemühleneinheit und/oder die Mahlwerkseinheit aus Edelstahl und/oder Aluminium gefertigt. Dadurch sind nicht nur langlebige und hygienische Materialien vorgesehen, sondern wird etwaige Abwärme beim Mahlprozess effektiv abgeführt, damit sich das Kaffeemehl so wenig wie möglich erwärmt.

In einer anderen Ausgestaltung der erfindungsgemäßen Kaffeemühle ist der Kaffeemehlauswurf im unteren Bereich der Kaffeemühle angeordnet. Dabei weist der Kaffeemehlauswurf zur effizienten Ausleitung von Kaffeemehl einen Austragszylinder auf. Dieses trägt zur effizienten und hygienischen Nutzbarkeit der erfindungsgemäßen Kaffeemühle bei.

Besonders bevorzugt ist dabei der Austragszylinder magnetisch an die Kaffeemühle ankoppelbar. Hierzu weist die Kaffeemühle mindestens einen ersten Haltemagneten und der ankoppelbare Austragszylinder mindestens einen zweiten Haltemagneten auf. Dabei können sowohl vereinzelte Haltemagneten oder ein ringförmiger erster und zweiter Haltemagnet verwendet werden, wobei ringförmige Haltemagneten eine besonders dichte Ankopplung und Positionierung des Austragszylinders ermöglichen.

Besonders vorteilhaft ist in einer erfindungsgemäßen Ausgestaltung der erfindungsgemäßen Kaffeemühle, wenn der Austragszylinder mindestens ein innenliegendes Flügelpropellerrad umfasst. Das drehbare Flügelpropellerrad fungiert dabei als für den Bediener unsichtbarer Kaffeemehlabstreifer, damit die Ansammlung alter Kaffeemehlreste aufgrund von Adhäsionskräften an den Wänden des Austragszylinders vermieden wird. Hierdurch wird die Hygiene, der Geschmack des aus dem gemahlenen Kaffeemehl hergestellten Kaffees und die effiziente Nutzung der Kaffeebohnen weiter verbessert.

Vorteilhafterweise ist das erfindungsgemäße Flügelpropellerrad aus Polymethylmethacrylat oder eloxiertem Aluminium hergestellt, da diese beiden Materialien eine besonders hohe mechanische und chemische Beständigkeit bieten und eine Adhäsion des Kaffeemehls minimieren.

Zur Sicherstellung eines kontinuierlichen Zustroms von Kaffeebohnen, was die Homogenität des Mahlprozesses verbessert, weist in einer Ausgestaltung der Erfindung die Kaffeemühle oberhalb des Stator-Außenrings und des Rotor-Drehkegels eine Kaffeebohnenzuführungszone auf, die insbesondere eine trichterförmige Ausgestaltung aufweist.

In einer besonders praktikablen und kompakten Ausführungsform der erfindungsgemäßen Kaffeemühle ist die Kaffeemühle an einen, zur Aufnahme eines Kaffeemehlauffangbehälters geeigneten, Standfuß angeschlossen. Dabei kann der Standfuß insbesondere einen gerundet ausgebildeten Bereich aufweisen, der zur Aufnahme eines Kaffeemehlauffangbehälters geeignet ist. Gleichzeitig wird durch einen solchen Standfuß sichergestellt, dass die Kaffeemühle während des Betriebs komfortabel in Position gehalten wird, ohne dass der Bediener die Kaffeemühle anderweitig, beispielsweise an einer Wand, fixieren muss.

Ferner betrifft die Erfindung ein Verfahren zur bedienerfreundlichen Fixierung einer, einen Stator-Außenring und einen an einem drehbaren Schaft gelagerten Rotor-Drehkegel aufweisenden, in z-Richtung schwimmend gelagerten Mahlwerkseinheit einer erfindungsgemäßen Kaffeemühle. Zur Verstellung des axialen Abstandes zwischen dem Stator-Außenring und dem Rotor-Drehkegel zur Einstellung des Mahlgrades, wird der Stator-Außenring an ein in z-Richtung verschiebliches, und in Rotationsrichtung des Rotor-Drehkegels festgelegtes Anschlussmittel, insbesondere ein Fixierstift, angeschlossen und dieses Anschlussmittel mit, in Folge der Einstellung des Mahlgrades, variierender Eindringtiefe in eine Führungsaufnahme eines Führungselementes der Mahlwerkseinheit in Eingriff gebracht. Dabei wird der Stator-Außenring an eine Objektivverstelleinheit angeschlossen, wobei die Objektivverstelleinheit über ein Feingewinde in z-Richtung verschieblich an den Kaffeebohnenbehälter angeschlossen wird.

Dieses Verfahren zeichnet sich durch besondere Bedienerfreundlichkeit aus, so dass der aus dem Stand der Technik bekannte und erforderliche Fixierungsschritt zur Festlegung des eingestellten Mahlgrades auf vorteilhafte Weise vermieden wird.

Nachfolgend ist die Erfindung unter Bezugnahme auf die beigefügten Figuren anhand diverser Ausführungsbeispiele beschrieben. Es zeigen:
- **Fig. 1:**: eine schematische Querschnittsdarstellung der erfindungsgemäßen Kaffeemühle mit Standfuß, Handschwungscheibe und Handhabe,
- **Fig. 2:**: eine schematische perspektivische Querschnittsdarstellung der erfindungsgemäßen Kaffeemühle mit einer relativen Position des Stator-Außenrings zu dem Rotor-Drehkegel, die zu einem feinen Kaffeemehl korrespondiert,
- **Fig. 3:**: eine schematische perspektivische Querschnittsdarstellung der erfindungsgemäßen Kaffeemühle mit einer relativen Position des Stator-Außenrings zu dem Rotor-Drehkegel, die zu einem groben Kaffeemehl korrespondiert,
- **Fig. 4:**: eine schematische perspektivische Querschnittsdarstellung der erfindungsgemäßen Kaffeemühle ohne angeschlossenen Kaffeebohnenbehälter, um einen Einblick auf die Kaffeebohnenzuführungszone, hier mit einer trichterförmigen Ausgestaltung, zu ermöglichen,
- **Fig. 5:**: eine schematische Seitenansicht des erfindungsgemäßen Kaffeemehlauswurfes im unteren Bereich der Kaffeemühle mit einem Austragszylinder und einem innenliegenden Flügelpropellerrad,
- **Fig. 6:**: eine schematische perspektivische Darstellung des Kaffeemehlauswurfes mit (links) und ohne (rechts) magnetisch angekoppelten Austragszylinder und
- **Fig. 7:**: eine schematische perspektivische Darstellung des Kaffeemehlauswurfes mit (links) und ohne (rechts) magnetisch angekoppelten, zylindrischen Austragszylinder.

In den verschiedenen Figuren sind gleiche Teile stets mit den gleichen Bezugszeichen versehen und werden daher in der Regel auch jeweils nur einmal benannt beziehungsweise erwähnt.

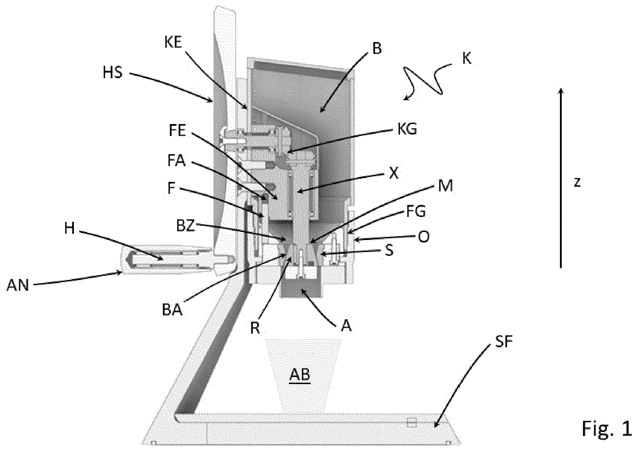

Figur 1 zeigt eine schematische Querschnittsdarstellung der erfindungsgemäßen Kaffeemühle K. Die Kaffeemühle weist eine Kaffeemühleneinheit KE auf, wobei die Kaffeemühleneinheit KE einen Kaffeebohnenbehälter B zur Aufnahme von Kaffeebohnen beinhaltet. Zudem umfasst die Kaffeemühleneinheit KE eine ein Kegelradgetriebe KG aufweisende Mahlwerkseinheit M, wobei die Mahlwerkseinheit M einen Stator-Außenring S und einen an einem drehbaren Schaft gelagerten Rotor-Drehkegel R aufweist. Der Stator-Außenring S und der Rotor-Drehkegel R rotieren relativ zueinander, wobei der Stator-Außenring S festgelegt ist, um zwischen ihnen, insbesondere auf den zueinander weisenden Mahlflächen, den eigentlichen Kaffeemahlprozess durchzuführen. Hierzu weisen der Stator-Außenring S und der Rotor-Drehkegel R eine keilartige Querschnittsstruktur auf, die die aus dem Kaffeebohnenbehälter B heranströmenden Kaffeebohnen aufnimmt und zermahlt. Zudem zeigt die in Figur 1 dargestellte erfindungsgemäße Kaffeemühle K eine Antriebseinheit AN, die die Mahlwerkseinheit M antreibt. Vorliegend weist die Antriebseinheit AN ein eine Handschwungscheibe HS auf, welches über eine Handhabe H bedient werden kann. Das erzeugte Kaffeemehl verlässt die Kaffeemühle K über einen Kaffeemehlauswurf. Die dargestellte Ausführungsform der erfindungsgemäßen Kaffeemühle K weist einen Standfuß SF auf, der zur Aufnahme eines Kaffeemehlauffangbehälters AB geeignet ist, in den das den Kaffeemehlauswurf A verlassende Kaffeemehl hineinfällt.

Besonders bei der erfindungsgemäßen Kaffeemühle K ist, dass die Mahlwerkseinheit M, derart schwimmend in z-Richtung gelagert ist, dass zur Verstellung des axialen Abstandes zwischen dem Stator-Außenring S und dem Rotor-Drehkegel R zur Einstellung des Mahlgrades, der Stator-Außenring S an ein in z-Richtung verschiebliches, und in Rotationsrichtung des Rotor-Drehkegels R festgelegtes Anschlussmittel F, hier: ein Fixierstift, angeschlossen ist.

Da dieses Anschlussmittel F mit, in Folge der Einstellung des Mahlgrades, variierender Eindringtiefe in eine Führungsaufnahme FA eines Führungselementes FE der Mahlwerkseinheit M eingreift, ist das Verstellen des axialen Abstandes zwischen dem Stator-Außenring S und dem Rotor-Drehkegel R bei dem Mahlprozess nicht möglich; vielmehr wird der eingestellte Mahlgrad gegenüber einer durch den Mahlprozess ungewünschten Verstellung konserviert.

Figur 1 zeigt, dass der Stator-Außenring S an eine Objektivverstelleinheit O angeschlossen ist, wobei die Objektivverstelleinheit über ein Feingewinde FG in z-Richtung verschieblich an den Kaffeebohnenbehälter B angeschlossen ist. Hierdurch wird einerseits die erforderliche Verschieblichkeit in z-Richtung in Folge der Bedienung der Objektivverstelleinheit O zur Einstellung des Mahlrgrades ermöglicht, während andererseits die Festlegung des Stator-Außenringes S in axiale Richtung (beziehungsweise in Drehrichtung des Rotor-Drehkegels R) über das in Eingriff mit der Führungsaufnahme FA eines Führungselementes FE der Mahlwerkseinheit M stehende, an den Stator-Außenring S angeschlossene Anschlussmittel F, dem Fixierstift, sichergestellt ist. Ein separater Fixierschritt zum Erhalt des Mahlrgrades (wie es bei herkömmlichen Kaffeemühlen mit Kegelradgetriebe der Fall ist) wird somit konstruktiv auf intelligente Weise entbehrlich gemacht, so dass die Bedienerfreundlichkeit der Kaffeemühle K signifikant gesteigert werden kann.

Durch die Integration der Mahlwerkseinheit M in den Kaffeebohnenbehälter B wird eine gleichermaßen kompakte wie optisch ansprechende Kaffeemühle K geschaffen, welche zudem den Vorteil bietet, dass bewegliche Teile von außen nicht sichtbar sind. Ferner ist die Achse X zum Antrieb des Rotor-Drehkegels R vertikal so angeordnet, insbesondere konzentrisch bezüglich des Stator-Außenrings S, dass sie zum Transport von Kaffeebohnen aus dem Kaffeebohnenbehälter B zum Stator-Außenring S und zum Rotor-Drehkegel R dient. Durch diese Kaffeebohnenführung wird vorteilhafterweise ein besonders kontinuierlicher und homogener Zufluss von Kaffeebohnen sichergestellt.

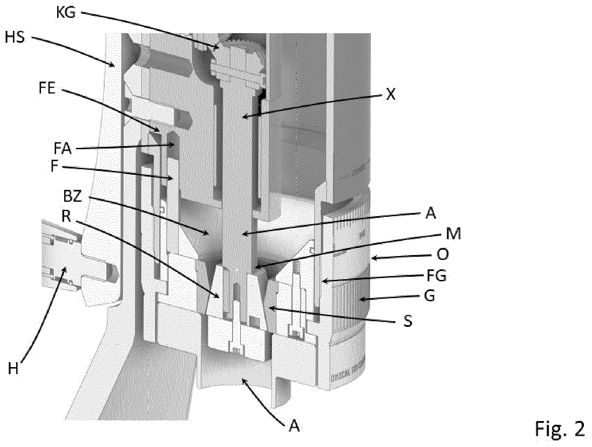

In Figur 2 ist eine schematische perspektivische Querschnittsdarstellung der erfindungsgemäßen Kaffeemühle K gezeigt, wobei eine relative Position des Stator-Außenrings S zu dem Rotor-Drehkegel R mittels der Objektivverstelleinheit O eingestellt worden ist, die zu einem feinen Kaffeemehl korrespondiert. Dabei ist der umlaufende Spalt, der durch den Stator-Außenring S und dem Rotor-Drehkegel R gebildet wird, sehr gering ausgebildet. Oberhalb des Spaltes bilden der Stator-Außenring S und der Rotor-Drehkegel R eine Kaffeebohnenaufnahme BA, die eine im Querschnitt V-förmige Struktur aufweist. Diese Kaffeebohnenaufnahme BA schließt an eine oberhalb des Stator-Außenrings S und des Rotor-Drehkegels R angeordnete Kaffeebohnenzuführungszone BZ an.

Bevorzugt, wie in Figur 2 dargestellt, weist die Kaffeebohnenzuführungszone BZ eine trichterförmige Ausgestaltung auf. Zur haptisch besonders sanften Einstellung ist die Mahlwerkseinheit M, wie vorstehend beschrieben, schwimmend in z-Richtung gelagert, wobei die Objektivverstelleinheit O über ein Feingewinde FG in z-Richtung verschieblich an den Kaffeebohnenbehälter B angeschlossen ist. Die Verstellung des Mahlgrades durch den Bediener erfolgt, indem er mit der Hand die Objektivverstelleinheit O in oder gegen den Uhrzeigersinn verdreht, wobei sich die Objektivverstelleinheit O dabei ähnlich wie bei einem Kameraobjektiv ebenfalls mit nach oben oder unten verschiebt. Zweckmäßigerweise kann die erfindungsgemäße Kaffeemühle K, wie in Figur 2 dargestellt, eine Skala zur Einstellung des Mahlgrades und/oder eine geriffelte Oberflächenstrukturierung G zur Erzielung einer besonderen Bedienhaptik aufweisen.

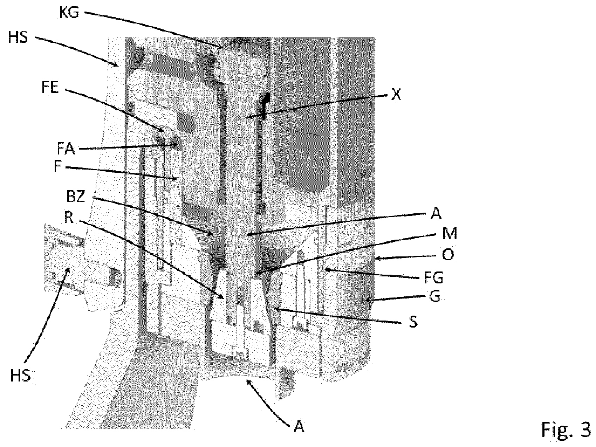

In Figur 3 ist analog zu Figur 2 eine schematische perspektivische Querschnittsdarstellung der erfindungsgemäßen Kaffeemühle K gezeigt, wobei eine relative Position des Stator-Außenrings S zu dem Rotor-Drehkegel R mittels der Objektivverstelleinheit O eingestellt worden ist, die zu einem groben Kaffeemehl korrespondiert. Erkennbar ist nicht nur der sich öffnende Spalt zwischen Stator-Außenring S und Rotor-Drehkegel R, sondern auch, dass die Objektivverstelleinheit O mit ihrem oberen Abschluss an einen Absatz des Kaffeebohnenbehälters B anstößt. Hierdurch wird auch intelligente Weise eine Begrenzung der Mahlgradeinstellung erreicht. Aufgrund der schwimmenden in z-Richtung gelagerten Mahlwerkseinheit M verschiebt sich die Mahlwerkseinheit M samt Anschlussmittel F in z-Richtung nach oben, wobei das Anschlussmittel F tiefer in z-Richtung im Vergleich zu Figur 2, in der eine feine Mahlgradeinstellung gezeigt ist, in die Führungsaufnahme FA eingreift. Der Stator-Außenring S ist in sämtlichen Stellungen, also: Mahlgraden, in Drehrichtung des Rotor-Drehkegel R über das an ihn angeschlossene Anschlussmittel F fixiert, ohne dass der Bediener einen gesonderten Fixierschritt durchführen muss.

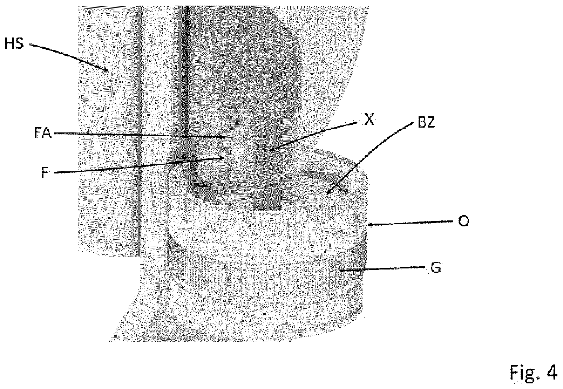

In Figur 4 ist eine schematische perspektivische Querschnittsdarstellung der erfindungsgemäßen Kaffeemühle K gezeigt, wobei der angeschlossene Kaffeebohnenbehälter B nicht gezeigt ist, um einen Einblick auf die Kaffeebohnenzuführungszone BZ, hier mit einer trichterförmigen Ausgestaltung, zu ermöglichen. Durch die durch die trichterförmig ausgeführte Kaffeebohnenzuführungszone BZ erhalten die Kaffeebohnen eine Vorzugsrichtung, die zum Stator-Außenring S und zum Rotor-Drehkegel R weist.

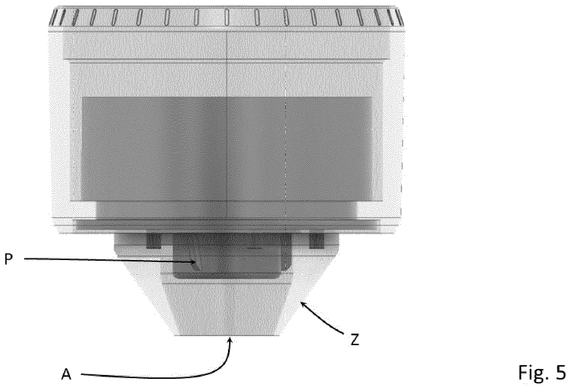

Figur 5 ist eine schematische Seitenansicht des erfindungsgemäßen Kaffeemehlauswurfes A, anzuordnen im unteren Bereich der Kaffeemühle K, mit einem Austragszylinder Z und einem innenliegenden Flügelpropellerrad P. Durch die Anordnung des Kaffeemehlauswurfes A im unteren Bereich der Kaffeemühle K wird sich die Schwerkraft zum Auswurf des Kaffeemehls zunutze gemacht. Das drehbare Flügelpropellerrad P, welches hier unterhalb des Rotor-Drehkegels R angeordnet ist, fungiert dabei als für den Bediener unsichtbaren Kaffeemehlabstreifer, damit die Ansammlung alter Kaffeemehlreste aufgrund von Adhäsionskräften an den Wänden des Austragszylinders Z vermieden wird. Hierdurch wird die Hygiene, der Geschmack des aus des gemahlenen Kaffeemehls hergestellten Kaffees (da kein altes Kaffeemehl zurückbleibt und sich mit neuem Kaffeemehl vermischt) und die effiziente Nutzung der Kaffeebohnen weiter verbessert. Vorteilhafterweise ist das erfindungsgemäße Flügelpropellerrad P aus Polymethylmethacrylat oder eloxiertem Aluminium hergestellt, da diese beiden Materialien eine besonders hohe mechanische und chemische Beständigkeit bieten.

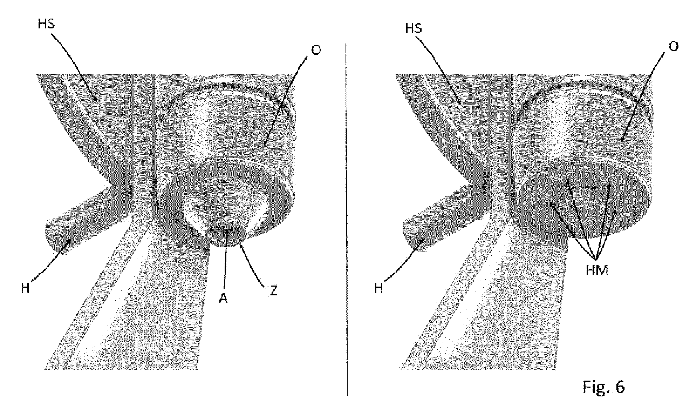

Figur 6 ist eine schematische perspektivische Darstellung des Kaffeemehlauswurfes A mit (links) und ohne (rechts) magnetisch angekoppelten Austragszylinder Z. Hierzu weist die Kaffeemühle K mindestens einen ersten Haltemagneten HM und der ankoppelbare Austragszylinder Z mindestens einen zweiten Haltemagneten (nicht dargestellt) auf. Hierdurch wird ein besonders einfaches Entfernen und Positionieren des hier trichterförmigen Austragszylinders Z ermöglicht.

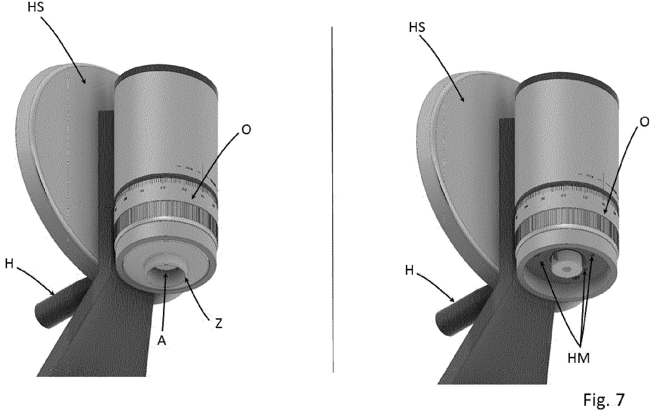

Wie in Figur 7 analog zu der Darstellung gemäß Figur 6 gezeigt ist, ist in einer erfindungsgemäßen Weiterbildung der magnetisch angekoppelte Austragszylinder Z nicht trichterförmig, sondern zylindrisch ausgestaltet. In einer solchen zylindrischen Ausführung des Austragszylinders Z wird auf besonders vorteilhafte Weise vermieden, dass sich Kaffeemehl an der Innenseite des Austragszylinders Z ansammelt, da die Schwerkraft das Kaffeemehl besonders effektiv von der Innenseite des Austragszylinders Z entfernt, da die maximale vektorielle Komponente der Schwerkraft, hier: in z-Richtung, genutzt wird, um das Kaffeemehl auszutragen.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Kaffeemehlauswurf
- AB: Kaffeemehlauffangbehälter
- AN: Antriebseinheit
- B: Kaffeebohnenbehälter
- BA: Kaffeebohnenaufnahme
- BZ: Kaffeebohnenzuführungszone
- F: Anschlussmittel
- FA: Führungsaufnahme
- FE: Führungselement
- FG: Feingewinde
- G: geriffelte Oberflächenstrukturierung
- H: Handhabe
- HM: Haltemagnet
- HS: Handschwungscheibe
- K: Kaffeemühle
- KE: Kaffeemühleneinheit
- KG: Kegelradgetriebe
- M: Mahlwerkseinheit
- O: Objektivverstelleinheit
- P: Flügelpropellerrad
- R: Rotor-Drehkegel
- S: Stator-Außenring
- SF: Standfuß
- Z: Austragszylinder

## Patentansprüche

1. Kaffeemühle mit einer Kaffeemühleneinheit (KE), wobei die Kaffeemühleneinheit (KE) einen Kaffeebohnenbehälter (B) , eine ein Kegelradgetriebe (KG) aufweisende Mahlwerkseinheit (M) , eine die Mahlwerkseinheit (M) antreibende Antriebseinheit (AN) und einen Kaffeemehlauswurf (A) aufweist, wobei die Mahlwerkseinheit (M) einen Stator-Außenring (S) und einen an einem drehbaren Schaft gelagerten Rotor-Drehkegel (R) aufweist, **dadurch gekennzeichnet, dass** die Mahlwerkseinheit (M) derart schwimmend in z-Richtung gelagert ist, dass zur Verstellung des axialen Abstandes zwischen dem Stator-Außenring (S) und dem Rotor-Drehkegel (R) zur Einstellung des Mahlgrades, der Stator-Außenring (S) an ein in z-Richtung verschiebliches, und in Rotationsrichtung des Rotor-Drehkegels (R) festgelegtes Anschlussmittel (F), insbesondere ein Fixierstift, angeschlossen ist und dieses Anschlussmittel (F) mit, in Folge der Einstellung des Mahlgrades, variierender Eindringtiefe in eine Führungsaufnahme (FA) eines Führungselementes (FE) der Mahlwerkseinheit (M) eingreift, wobei der Stator-Außenring (S) an eine Objektivverstelleinheit (O) angeschlossen ist, wobei die Objektivverstelleinheit (O) über ein Feingewinde (FG) in z-Richtung verschieblich an den Kaffeebohnenbehälter (B) angeschlossen ist.

2. Kaffeemühle nach Anspruch 1, **dadurch gekennzeichnet, dass** die Mahlwerkseinheit (M) in den Kaffebohnenbehälter (B) integriert ist.

3. Kaffeemühle nach Anspruch 2, **dadurch gekennzeichnet, dass** der Rotor-Drehkegel (R) über eine Achse (X) angetrieben wird, wobei die Achse (X) so angeordnet, insbesondere konzentrisch bezüglich des Stator-Außenrings (S), ist, dass sie zum Transport von Kaffeebohnen aus dem Kaffeebohnenbehälter (B) zum Stator-Außenring (S) und zum Rotor-Drehkegel (R) dient.

4. Kaffeemühle nach einem der Ansprüche 1 bis 3, **dadurch gekennzeichnet, dass** die Kaffeemühle ein Wiege- und Steuersystem zum Bereitstellen einer definierten Menge an Kaffeemehl umfasst.

5. Kaffeemühle nach einem der Ansprüche 1 bis 4, **dadurch gekennzeichnet, dass** die, die Mahlwerkseinheit (M) antreibende, Antriebseinheit (AN) eine Handschwungscheibe (HS) mit einer Handhabe (H) umfasst.

6. Kaffeemühle nach einem der Ansprüche 1 bis 4, **dadurch gekennzeichnet, dass** die, die Mahlwerkseinheit (M) antreibende, Antriebseinheit (AN) einen Elektromotor umfasst.

7. Kaffeemühle nach einem der Ansprüche 1 bis 6, **dadurch gekennzeichnet, dass** das die Objektivverstelleinheit (O) ein Zylinderrad aufweist.

8. Kaffeemühle nach einem der Ansprüche 1 bis 7, **dadurch gekennzeichnet, dass** die Kaffeemühleneinheit (KE) und/oder die Mahlwerkseinheit (M) aus Edelstahl und/oder Aluminium gefertigt ist.

9. Kaffeemühle nach einem der Ansprüche 1 bis 8, **dadurch gekennzeichnet, dass** der Kaffeemehlauswurf (A) im unteren Bereich der Kaffeemühle (K) angeordnet ist und einen Austragszylinder (Z) aufweist.

10. Kaffeemühle nach Anspruch 9, **dadurch gekennzeichnet, dass** der Austragszylinder (Z) magnetisch an die Kaffeemühle (K) ankoppelbar ist.

11. Kaffeemühle nach einem der Ansprüche 9 oder 10, **dadurch gekennzeichnet, dass** der Austragszylinder (Z) mindestens ein innenliegendes Flügelpropellerrad (P) umfasst.

12. Kaffeemühle nach Anspruch 11, **dadurch gekennzeichnet, dass** das Flügelpropellerrad (P) aus Polymethylmethacrylat oder eloxiertem Aluminium besteht.

13. Kaffeemühle nach einem der Ansprüche 1 bis 12, **dadurch gekennzeichnet, dass** die Kaffeemühle (K) oberhalb des Stator-Außenrings (S) und des Rotor-Drehkegels (R) eine Kaffeebohnenzuführungszone (BZ), insbesondere mit einer trichterförmigen Ausgestaltung, aufweist.

14. Kaffeemühle nach einem der Ansprüche 1 bis 13, **dadurch gekennzeichnet, dass** die Kaffeemühle (K) an einen, zur Aufnahme eines Kaffeemehlauffangbehälters (AB) geeigneten, Standfuß (SF) angeschlossen ist.

15. Verfahren zur bedienerfreundlichen Fixierung einer, einen Stator-Außenring (S) und einen an einem drehbaren Schaft gelagerten Rotor-Drehkegel (R) aufweisenden, in z-Richtung schwimmend gelagerten Mahlwerkseinheit (M) einer Kaffeemühle (K) nach einem der Ansprüche 1 bis 14, wobei zur Verstellung des axialen Abstandes zwischen dem Stator-Außenring (S) und dem Rotor-Drehkegel (R) zur Einstellung des Mahlgrades, der Stator-Außenring (S) an ein in z-Richtung verschiebliches, und in Rotationsrichtung des Rotor-Drehkegels (R) festgelegtes Anschlussmittel (F), insbesondere ein Fixierstift, angeschlossen wird und dieses Anschlussmittel (F) mit, in Folge der Einstellung des Mahlgrades, variierender Eindringtiefe in eine Führungsaufnahme (FA) eines Führungselementes (FE) der Mahlwerkseinheit (M) in Eingriff gebracht wird, wobei der Stator-Außenring (S) an eine Objektivverstelleinheit (O) angeschlossen wird, wobei die Objektivverstelleinheit (O) über ein Feingewinde (FG) in z-Richtung verschieblich an den Kaffeebohnenbehälter (B) angeschlossen wird.

## Claims

1. A coffee mill with a coffee mill unit (KE), the coffee mill unit (KE) having a coffee bean container (B), a grinder unit (M) having a bevel gear (KG), a drive unit (AN) driving the grinder unit (M) and a ground coffee ejector (A), wherein the grinder unit (M) has a stator outer ring (S) and a rotor rotary cone (R) mounted on a rotatable shaft, **characterised in that** the grinder unit (M) is mounted floatingly in a z-direction such that for adjusting the axial distance between the stator outer ring (S) and the rotor rotary cone (R) in order to set the degree of grinding, the stator outer ring (S) is connected to a connection means (F), in particular a fixing pin, which is displaceable in the z-direction and fixed in the direction of rotation of the rotor rotary cone (R), and this connection means (F) engages a guide receptacle (FA) of a guide member (FE) of the grinder unit (M) with a varying penetration depth as a result of the adjustment of the degree of grinding, wherein the stator outer ring (S) is connected to an objective adjustment unit (O), the objective adjustment unit (O) being connected to the coffee bean container (B) via a fine thread (FG) so as to be displaceable in the z-direction.

2. The coffee mill of claim 1, **characterised in that** the grinder unit (M) is integrated into the coffee bean container (B).

3. The coffee mill of claim 2, **characterised in that** the rotor rotary cone (R) is driven through an axis (X), wherein the axis (X) is arranged, in particular concentrically with respect to the stator outer ring (S), such that it serves to transport coffee beans from the coffee bean container (B) to the stator outer ring (S) and to the rotor rotary cone (R).

4. The coffee mill of any one of claims 1 to 3, **characterised in that** the coffee mill comprises a weighing and controlling system for providing a defined quantity of ground coffee.

5. The coffee mill of any one of claims 1 to 4, **characterised in that** the drive unit (AN) driving the grinder unit (M) comprises a manual flywheel (HS) with a handle (H).

6. The coffee mill of any one of claims 1 to 4, **characterised in that** the drive unit (AN) driving the grinder unit (M) comprises an electric motor.

7. The coffee mill of any one of claims 1 to 6, **characterised in that** the objective adjustment unit (O) has a cylindrical gear.

8. The coffee mill of any one of claims 1 to 7, **characterised in that** the coffee mill unit (KE) and/or the grinder unit (M) is made of stainless steel and/or aluminium.

9. The coffee mill of any one of claims 1 to 8, **characterised in that** the ground coffee ejector (A) is arranged in the lower region of the coffee mill (K) and has a discharge cylinder (Z).

10. The coffee mill of claim 9, **characterised in that** the discharge cylinder (Z) is magnetically couplable to the coffee mill (K).

11. The coffee mill of any one of claims 9 or 10, **characterised in that** the discharge cylinder (Z) comprises at least one internal blade propeller wheel (P).

12. The coffee mill of claim 11, **characterised in that** blade propeller wheel (P) is made of polymethylmethacrylate or anodised aluminium.

13. The coffee mill of any one of claims 1 to 12, **characterised in that** the coffee mill (K) has a coffee bean feeding zone (BZ), in particular with a funnel-shaped design, above the stator outer ring (S) and the rotor rotary cone (R).

14. The coffee mill of any one of claims 1 to 13, **characterised in that** the coffee mill (K) is connected to a base (SF) suitable for accommodating a ground coffee collecting container (AB).

15. A method for operator-friendly fixing of a grinder unit (M) of a coffee mill (K) of any one of claims 1 to 14 having a stator outer ring (S) and a rotor rotary cone (R) mounted on a rotatable shaft and being mounted floatingly in a z-direction, wherein, for adjusting the axial distance between the stator outer ring (S) and the rotor rotary cone (R) in order to set the degree of grinding, the stator outer ring (S) is connected to a connection means (F), in particular a fixing pin, which is displaceable in the z-direction and fixed in the direction of rotation of the rotor rotary cone (R), and this connection means (F) engages a guide receptacle (FA) of a guide member (FE) of the grinder unit (M) with a varying penetration depth as a result of the adjustment of the degree of grinding, wherein the stator outer ring (S) is connected to an objective adjustment unit (O), the objective adjustment unit (O) being connected to the coffee bean container (B) via a fine thread (FG) so as to be displaceable in the z-direction.

## Revendications

1. Moulin à café avec une unité de moulin à café (KE), l'unité de moulin à café (KE) présentant un réservoir de grains de café (B), une unité de moulin (M) présentant un engrenage conique (KG), une unité d'entraînement (AN) entraînant l'unité de moulin (M) et une éjection de café moulu (A), l'unité de moulin (M) présentant une bague extérieure de stator (S) et un cône de rotation de rotor (R) monté sur un arbre rotatif, **caractérisé en ce que** l'unité de moulin (M) est montée de manière flottante dans la direction z de telle sorte que pour le réglage de la distance axiale entre la bague extérieure de stator (S) et le cône de rotation de rotor (R) pour le réglage du degré de mouture, la bague extérieure de stator (S) est raccordée à un moyen de raccordement (F), en particulier une goupille de fixation, déplaçable dans la direction z et fixé dans la direction de rotation du cône de rotation de rotor (R), et ce moyen de raccordement (F) s'engage dans un logement de guidage (FA) d'un élément de guidage (FE) de l'unité de moulin (M) avec une profondeur de pénétration qui varie à la suite du réglage du degré de mouture, la bague extérieure de stator (S) étant raccordée à une unité de réglage d'objectif (O), l'unité de réglage d'objectif (O) étant raccordée au réservoir de grains de café (B) par l'intermédiaire d'un filetage fin (FG) de manière à pouvoir être déplacée dans la direction z.

2. Moulin à café de la revendication 1, **caractérisé en ce que** l'unité de moulin (M) est intégrée dans le réservoir de grains de café (B).

3. Moulin à café de la revendication 2, **caractérisé en ce que** le cône de rotation de rotor (R) est entraîné par un axe (X), l'axe (X) étant disposé, en particulier concentriquement par rapport à la bague extérieure de stator (S), de telle sorte qu'il sert à transporter des grains de café du réservoir de grains de café (B) à la bague extérieure de stator (S) et au cône de rotation de rotor (R).

4. Moulin à café de l'une des revendications 1 à 3, **caractérisé en ce que** le moulin à café comprend un système de pesage et de commande pour fournir une quantité définie de café moulu.

5. Moulin à café de l'une des revendications 1 à 4, **caractérisé en ce que** l'unité d'entraînement (AN) entraînant l'unité de moulin (M) comprend un volant manuel (HS) avec une manette (H).

6. Moulin à café de l'une des revendications 1 à 4, **caractérisé en ce que** l'unité d'entraînement (AN) entraînant l'unité de moulin (M) comprend un moteur électrique.

7. Moulin à café de l'une des revendications 1 à 6, **caractérisé en ce que** l'unité de réglage d'objectif (O) comprend une roue cylindrique.

8. Moulin à café de l'une des revendications 1 à 7, **caractérisé en ce que** l'unité de moulin à café (KE) et/ou l'unité de moulin (M) est fabriquée en acier inoxydable et/ou en aluminium.

9. Moulin à café de l'une des revendications 1 à 8, **caractérisé en ce que** l'éjection de café moulu (A) est disposée dans la partie inférieure du moulin à café (K) et comporte un cylindre d'évacuation (Z).

10. Moulin à café de la revendication 9, **caractérisé en ce que** le cylindre d'évacuation (Z) peut être couplé magnétiquement au moulin à café (K).

11. Moulin à café de l'une des revendications 9 ou 10, **caractérisé en ce que** le cylindre d'évacuation (Z) comprend au moins une hélice à pales (P) située à l'intérieur.

12. Moulin à café de la revendication 11, **caractérisé en ce que** l'hélice à pales (P) est en polyméthacrylate de méthyle ou en aluminium anodisé.

13. Moulin à café de l'une des revendications 1 à 12, **caractérisé en ce que** le moulin à café (K) présente au-dessus de la bague extérieure de stator (S) et du cône de rotation de rotor (R) une zone d'alimentation en grains de café (BZ), en particulier avec une configuration en forme d'entonnoir.

14. Moulin à café de l'une des revendications 1 à 13, **caractérisé en ce que** le moulin à café (K) est raccordé à un pied (SF) adapté pour recevoir un récipient de collecte de café moulu (AB).

15. Procédé pour la fixation conviviale d'une unité de moulin (M) d'un moulin à café (K) de l'une des revendications 1 à 14, présentant une bague extérieure de stator (S) et un cône de rotation de rotor (R) logé sur un arbre rotatif et logé de manière flottante dans la direction z, dans lequel, pour le réglage de la distance axiale entre la bague extérieure de stator (S) et le cône de rotation de rotor (R) pour le réglage du degré de mouture, la bague extérieure de stator (S) est raccordée à un moyen de raccordement (F) déplaçable dans la direction z et fixé dans la direction de rotation du cône de rotation de rotor (R), en particulier une goupille de fixation, et ce moyen de raccordement (F) s'engage dans un logement de guidage (FA) d'un élément de guidage (FE) de l'unité de moulin (M) avec une profondeur de pénétration qui varie à la suite du réglage du degré de mouture, la bague extérieure de stator (S) étant raccordée à une unité de réglage d'objectif (O), l'unité de réglage d'objectif (O) étant raccordée au réservoir de grains de café (B) par l'intermédiaire d'un filetage fin (FG) de manière à pouvoir être déplacée dans la direction z.
